# EUROPEAN PATENT SPECIFICATION

(11) **EP 3 082 435 B1**
(45) Date of publication and mention of the grant of the patent: **27.09.2017**
(21) Application number: 14812869.7
(22) Date of filing: 18.12.2014
(51) Int. Cl.: A22B 3/08

(54) **A METHOD FOR PREPARING FISH MEAT DEPLETED IN BLOOD**
VERFAHREN ZUR HERSTELLUNG VON BLUTARMEM FISCHFLEISCH
PROCÉDÉ DE PRÉPARATION DE CHAIR DE POISSON DONT LE SANG A ÉTÉ RETIRÉ

(30) Priority: 19.12.2013 DK 201370789
(43) Date of publication of application: 26.10.2016
(73) Proprietor: SP/F Frama, Klaksvik 700 (FO)
(72) Inventor: SØRENSEN, Tróndur F., Hvannasund 740 (FO)
(74) Representative: Awapatent A/S
(86) International application number: PCT/DK2014/050440
(87) International publication number: WO 2015/090336

(56) References cited:
- WO-A1-98/44805
- WO-A1-03/099026
- US-A- 5 327 854
- US-A1- 2013 017 771

## Description

### Field of the invention

The present invention relates to a method for preparing fish meat depleted in blood. The depletion in blood improves the taste of the meat. Furthermore, the method suggested herein in addition improves the tenderness of the meat.

### Background

It has been known for some time to use a fish shocker or a fish stunner. Generally, the fish stunner operates at a frequency of 5-100 Hz and at a voltage of 400 to 1000 V. The fish stunner is used on the whole fish before the fish is filleted. An example of a useful fish stunner is Samus300, which may be acquired from electro-fisher.com.

The fish stunner serves to anaesthetize the fish before the slaughtering. The fish stunner is used for some types of cleaning equipment because it is important that the fish does not move during processing as exemplified in EP0917823. Anaesthetizing the fish ensures a lower cutting failure rate during cleaning and filleting.

Electrical stimulation may also be applied to the fish after cleaning in order to speed up the rigor time which provides the advantage that pin-bones may be removed more easily without breaking as described in US 2013/0017771.

The meat of bled fish, i.e. meat from a fish that has had its blood partly or entirely removed, has a taste which is perceived of a higher quality by many customers. It is, however, difficult to remove blood from a fish because it requires the fish to be alive while the blood is extracted, since the heart of the fish pumps out the blood. Furthermore, only a fraction of the entire amount of blood may be removed by the heart because it stops beating after a while. Since fish are caught on an industrial scale in large quantities in each catch a further problem is to remove blood from fish the heart of which has stopped beating.

### Summary of the invention

An object of the present invention is to provide fish meat with a better taste by bleeding the fish

The present invention relates to a method for preparing fish meat depleted in according to claim 1. By cutting the one or more of arteries conveying blood from the heart to the gills the fish will bleed. When the heart of the fish is stimulated by the electrical impulses it will contract and pump out the blood in the ventricle. After the electrical impulse is ceased the heart will relax and veins will deliver blood from the various parts of the fish to the ventricle of the heart. At the next electrical impulse the cycle of events is continued and the heart again delivers blood out of the fish to the surroundings.

Furthermore, taste improvements of the fish meat have been experienced compared to fishes that have been bled the normal way, i.e. without the use of electrical impulses. Without being bound by theory it is currently believed that the fish meat when treated with the electrical impulses counteract the pH decline normally observed so the rigor development is reduced. In effect the fish meat is perceived more tender.

Also the general structure of the fish meat is improved by treatment with electrical impulses. Among other effects, the tendency for gaps to occur in the fish meat is reduced. Gaps may result in the formation of flakes of fish meat, which normally is undesired. While it is not known with certainty at the time of writing it is presently believed that the reason for the reduction in gap formations is that proteins are bound in the meat by the impulses.

In a suitable embodiment the electrical impulses are generated by intermittent application of a direct current. By intermittent application of the direct current is meant that a pause of a certain time interval is present between two impulses of direct current. Thus, between the electrical impulses the heart is allowed to relax and be filled with blood from the organs of the fish. In an alternative embodiment an alternating current of a certain frequency may be used.

The duration of the impulses is adapted to the specific fish treated to obtained the desired response from the heart. In an aspect of the invention, the electrical impulses are generated by application to the fish of a direct current for 1/50-2 seconds. In a preferred aspect of the invention the duration of the impulse is at least 1/30, suitably at least 1/10, such as 1/5 second. Usually, the duration of the current impulse is not above 2 seconds because a duration above the threshold necessary for the heart to make a contraction will not further improve the depletion of blood from the fish. In a certain aspect the duration of the current impulse is not above 1 second.

The pause between two electrical impulses may have any duration that enables the influx of sufficient blood into the receiving cavities of the heart. In an aspect of the invention the pause between two electrical impulses is 1 second or more. To obtain an even better filling of the ventricle the duration of the pause between two impulses is 2 seconds or more, such as 3 seconds or more and preferable 4 seconds or more. Usually the duration between two impulses does not exceed 30 seconds. In a certain aspect of the invention the duration of the pause is 20 seconds or less, such as 15 seconds or less. In a preferred aspect of the invention the pause duration is between 4 seconds and 15 seconds, such as around 5, 6, 7, 8, 9, 10, 11, 12, or 13 seconds.

The total number of treatments with electrical impulses may vary in accordance with the need. In a preferred aspect of the invention the fish is subjected to 3 or more impulses. To obtain an improved deletion of blood from the fish it is generally desired to apply 5 or more, such as 8 or more, preferably 10 or more electrical impulses. In some applications it may be an advantage to subject the fish to more impulses than is needed for the bleeding to stop, i.e. the visual determination of no more blood flowing out of the fish. The excess amounts of electrical impulses may in some instance improve the tenderness and/or the mouth feeling of the fish meat.

The total duration of the treatment with electrical impulses according to the method of the invention may vary in accordance with the duration of the electrical impulses, the duration of the pauses, the specific fish treated etc. Generally, the total treatment time is less than 10 minutes, such as less than 8 minutes, preferably less than 6 minutes.

The voltage should be sufficient to stimulate the contraction of the heart muscle. Generally, the voltage of the electrical impulse is 20 V or less, such as 15V or less, preferably 12 V or less. Many ships are as a standard provided with a power supply of 12 V. In a certain aspect of the invention such power supply is used directly. In other aspects of the invention a lower voltage is used, such as a voltage of 10 V or less, preferably 8 V or less. Usually, the voltage is not lower than the threshold potential of the fish. The threshold may vary but is usually around 25mV, such as between 15 mV and 35 mV. To obtain a sufficient effective pumping of the heart the potential is usually not below 1 V. In a preferred aspect of the invention the voltage is 2 V or more, such as 3 V or more. The current used depends on the conductivity of the water around the fish, the number of fish treated, the type and posture of the fish etc. It is generally needed to use a current of 0.1 A or more, suitably 0.3 A or more. In a suitable embodiment the current is 0.5 A or more. Usually, the current is not higher than 10 A, such as 5 A.

During working of the method according to the invention, electrolysis may occur, which result in decomposition of the water into hydrogen gas (H₂) and oxygen gas (O₂) or, in saline waters, production of chlorine gas (Cl₂). The production of gases may be of disadvantage in some situations and may be avoided or inhibited if the polarity of the poles delivering the electrical impulses in one time period is reversed in another time period. Notably, when water surrounding the fish is flushed or streamed the water can carry away the gases dissolved in the water thereby preventing or inhibiting the liberation of the gases to the atmosphere above the surface. During long term use deposits may be precipitated on the pole surfaces. However, by changing the polarity in different time periods the amount of such deposits may be reduced.

Arteries are blood vessels transporting blood away from the heart (efferent vessels). When one or more arteries are cut the heart can be used as a pump to transport the blood out of the fish. In a preferred embodiment of the present invention, the artery is cut between the heart and the gills.

In an aspect of the invention the artery is a major artery, such as ventral aorta. Usually the artery is cut from the abdominal side of the fish. The cutting may be performed by a sharp object such as a knife. In a preferred aspect at least the ventral aorta is cut. The ventral aorta supplies blood to the gills of the fish. After the arteries has passed the gills and the blood has been oxygenated it is collected in dorsal aorta. The dorsal aorta supplies blood to the body and the head of the fish.

While it suffices to cut the artery transporting blood from the heart to the gills it may be desired to extent the cut through the gills. The cutting may be stopped at the upper part of the gills. In a certain embodiment the entire head is cut off. The advantage of cutting of the entire head is due to processing methods. The cutting of the vein from the brain will not significantly affect the transport of blood to the heart because the valves in the vein will prevent leakage of blood.

In another embodiment it is important that the major vein transporting blood to the heart from the fish body and the organs is not affect by the cutting. By maintaining the major veins it is ensured that the blood from the fish meat is transported to the heart and pumped out of the fish. Suitably, the dorsal vein is maintained to ensure delivery of blood in the fish meat to the heart from the body and the organs of the fish.

It was surprisingly discovered that it was possible to start the pumping of the heart again using electrical impulses as disclosed herein after the fish had been caught and stored in a non-aqueous environment for 15 minutes or more, such as 30 minutes or more. In a certain embodiment, the fish was stored for 1 hour or more, such as 2 hours or more. The possibility of storing the fish after catch for a prolonged time period before the blood is depleted in accordance with the present method is obviously an advantage when it comes to process management on-board a vessel. A catch may be of several tons of fish and it may take hours for the personnel to clean the fish.

The fish may be processed according to the present method individually or a number of fish may be treated together. The simultaneous treatment of several fishes together in a batch process lowers the total process time for cleaning a catch. Suitably, the artery connecting the heart and the gills is cut individually and a multitude of fishes are subjected to electrical impulses in the same compartment. After bleeding of the fishes, they may be gutted. The cutting of the artery and the treatment with electrical impulses may occur in the same compartment. After gutting of the fishes they may be stored, typical on ice, or they may be further process e.g. by filleting.

According to a preferred method the fishes are treated in a continuous process. In a certain process the fishes are transported on a conveyer belt through a cutting zone, in which the artery is cut, and subsequently through a zone for electrical impulses of a strength sufficient for obtaining function of the heart. The conveyer belt that moves the fishes through a zone or between zones may be divided in sections to secure the fish on the conveyer belt. The sections may be formed by trays or partitions walls provided perpendicular to the movement of the conveyer belt. Optionally, water may be passed the fish during or after treatment with electrical impulses in a countercurrent fashion to remove the externalized blood from the fish.

In a preferred aspect of the invention, the fish is supplied to a moving conveyer belt divided into sections by partition walls. Two partition walls define a section of a length in the moving direction of the conveyer belt, said length being dependent on the length of the fish treated. Suitably the length of the section corresponds to the length of the fish or is longer than the fish. The conveyer belt transports the fish to a fist zone in which the artery of the fish is cut. The cutting may be performed manually of by a suitable machine. Since it is important the cut is made with some precision it is presently preferred that the cut is made by hand. However, a precision cutting machine may be developed using conventional technology for cutting the artery.

After the cutting zone, the fish is transported to the zone delivering electrical impulses. Suitably, the positive and the negative pole are positioned on opposite sides of the conveyer belt. Sea water, suitably saline water, is present for conducting the current from the positive pole to the negative pole. The water may be flowing in a counter-flow fashion to remove the blood from the fishes. The width of the conveyer may be from 10 cm for individual treatment of fish, to 2 meters for treatment of a plurality of fish simultaneously. Suitable, the width is from 40cm to 150cm, such as from 50cm to 120cm.

After the depletion of blood from the fish meat, the fish may be treated in accordance with conventional means, including removal of the gut content, head, tail, and fins. Subsequently the fish skin may be removed and/or the fish may be filleted.

### Brief description of the figures

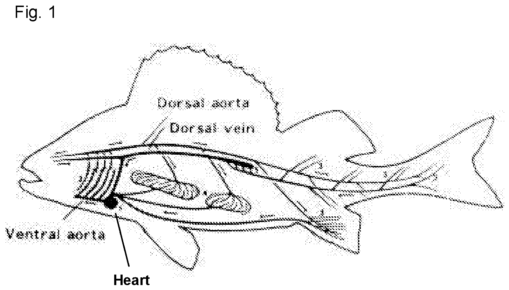

Fig. 1 shows the blood circulation of a typical fish.

### Example

A Pollack caught in the sea around the Faroe Islands was treated in accordance with the following invention.

The pollack was alive when the artery between the gills and the heart was cut with a knife. Subsequently the pollack was placed in a container containing saline water. A negative and positive pole connected to a direct current source of 9 V was positioned in the water on each side of the fish. The direct current source ejected an electrical impulse with an interval of 5 seconds. It was observed that the heart actively pumped blood from the fish out into the surrounding water in every 5 second for 2 minutes. The treatment with electrical impulses continued for 1 minute further without the heart ejecting visible blood.

In a second experiment, a cod stored for 2 hours after catch was treated in accordance with the invention. After the artery between the heart and the gills was cut the fish was placed in a pound provided with a positive and a negative pole. The poles were connected to a direct current source of 12V intermittently delivering electrical impulses every 8 seconds. The fish was subjected to treatment with electrical impulses for 4 minutes. After 3 minutes blood ejected from the heart was no longer visible.

In a third example, 6 cods stored for about 2 hours were treated simultaneously. Initially, the arteries between the heart and the gills were cut and the fishes were placed in a pound. The pound was provided with a positive and a negative pole connected to a 12 V direct current source. The 6 cods were subjected to intermittent electrical impulses with a distance between each electrical impulse of 6 seconds. The hearts of the cods pumped the blood out in the surrounding water in an essentially synchronized manner when the electrical impulses were delivered.

## Claims

1. A method for preparing fish meat depleted in blood, comprising the steps of:
a) cutting one or more arteries of a fish between the heart and the gills and
b) subjecting the fish to electrical impulses for stimulating the heart to pump out the blood through a cut artery, wherein the electrical impulses are generated by intermittent application of a direct current, wherein the electrical impulses are generated by application to the fish of a direct current for 1/50-2 seconds, and wherein the pause between two electrical impulses is 1 second or more.

2. The method according to claim 1, wherein the fish is subjected to 3 or more impulses.

3. The method according to anyone of the claims 1 to 2 wherein the voltage of the electrical impulse is 20 V or less.

4. The method according to anyone of the claims 1 to 3 wherein polarity of the poles delivering the electrical impulses in one time period is reversed in another time period.

5. The method according to anyone of the claims 1 to 4 wherein the artery cut is ventral aorta.

6. The method according to anyone of the claims 1 to 5 wherein the entire head is cut off.

7. The method according to anyone of the claims 1 to 6 wherein the fish has been stored in a compartment for 30 minutes or more before the cutting of one or more arteries.

## Patentansprüche

1. Verfahren zur Herstellung von blutarmem Fischfleisch, das die folgenden Schritte umfasst:
a) Zerschneiden von einer oder mehreren Arterien eines Fisches zwischen dem Herz und den Kiemen und
b) Aussetzen des Fisches gegenüber elektrischen Impulsen, um das Herz anzuregen, das Blut durch eine zerschnittene Arterie auszupumpen, wobei die elektrischen Impulse durch ein intermittierendes Anlegen eines Gleichstroms erzeugt werden, wobei die elektrischen Impulse durch ein Anlegen eines Gleichstroms an den Fisch für 1/50-2 Sekunden erzeugt werden und wobei die Unterbrechung zwischen zwei elektrischen Impulsen 1 Sekunde oder mehr beträgt.

2. Verfahren nach Anspruch 1, wobei der Fisch 3 oder mehr Impulsen ausgesetzt wird.

3. Verfahren nach einem der Ansprüche 1 bis 2, wobei die Spannung der elektrischen Impulse 20 V oder weniger beträgt.

4. Verfahren nach einem der Ansprüche 1 bis 3, wobei die Polarität der Pole, die die elektrischen Impulse liefern, in einem Zeitraum in einem anderen Zeitraum umgekehrt wird.

5. Verfahren nach einem der Ansprüche 1 bis 4, wobei die zerschnittene Arterie eine ventrale Aorta ist.

6. Verfahren nach einem der Ansprüche 1 bis 5, wobei der gesamte Kopf abgeschnitten wird.

7. Verfahren nach einem der Ansprüche 1 bis 6, wobei der Fisch für 30 Minuten oder länger vor dem Zerschneiden von einer oder mehreren Arterien in einem Ablagefach gelagert worden ist.

## Revendications

1. Procédé de préparation de viande de poisson appauvrie en sang, comprenant les étapes consistant à :
a) sectionner une ou plusieurs artères d'un poisson entre le coeur et les branchies et
b) soumettre le poisson à des impulsions électriques pour stimuler le coeur à pomper le sang à travers une artère sectionnée, les impulsions électriques étant générées par l'application intermittente d'un courant continu, dans lequel les impulsions électriques sont générées par application au poisson d'un courant continu pendant 1/50 à 2 secondes, et dans lequel la pause entre deux impulsions électriques est de 1 seconde ou plus.

2. Procédé selon la revendication 1, dans lequel le poisson est soumis à 3 impulsions ou plus.

3. Procédé selon l'une quelconque des revendications 1 à 2, dans lequel la tension de l'impulsion électrique est de 20 V ou moins.

4. Procédé selon l'une quelconque des revendications 1 à 3, dans lequel la polarité des pôles délivrant les impulsions électriques au cours d'une période de temps est inversée au cours d'une autre période de temps.

5. Procédé selon l'une quelconque des revendications 1 à 4, dans lequel l'artère sectionnée est l'aorte ventrale.

6. Procédé selon l'une quelconque des revendications 1 à 5, dans lequel la tête entière est sectionnée.

7. Procédé selon l'une quelconque des revendications 1 à 6, dans lequel le poisson est stocké dans un compartiment pendant 30 minutes ou plus avant de sectionner une ou plusieurs artères.
